Europäisches Patentamt

European Patent Office

Office européen des brevets

(19)

(11) Veröffentlichungsnummer: **0 020 904**
**B1**

(12) ## EUROPÄISCHE PATENTSCHRIFT

(45) Veröffentlichungstag der Patentschrift:
29.12.82

(51) Int. Cl.³: **C 02 F 11/12**

(21) Anmeldenummer: **80101982.9**

(22) Anmeldetag: **14.04.80**

(54) **Verwendung von Calciumsulfat zur Entwässerung von Abwasserschlamm.**

(30) Priorität: **23.05.79 DE 2920914**

(43) Veröffentlichungstag der Anmeldung:
**07.01.81 Patentblatt 81/1**

(45) Bekanntmachung des Hinweises auf die Patenterteilung:
**29.12.82 Patentblatt 82/52**

(84) Benannte Vertragsstaaten:
**AT BE CH DE FR GB IT LI NL SE**

(56) Entgegenhaltungen:
**FR-A-1 560 439**
**US-A-3 226 319**
**US-A-3 980 558**

(73) Patentinhaber: **HOECHST AKTIENGESELLSCHAFT,
Postfach 80 03 20, D-6230 Frankfurt/Main 80 (DE)**

(72) Erfinder: **Dany, Franz-Josef, Dr., Kölner Ring 167,
D-5042 Erftstadt (DE)**
Erfinder: **Ulrich, Hannsjörg, Dr., von
Bodelschwinghweg 47, D-5042 Erftstadt (DE)**
Erfinder: **Gleisberg, Dietrich, Dr., Falkenweg 12,
D-5042 Erftstadt (DE)**
Erfinder: **Kalteyer, Gerd, Laurentiusstrassse 8,
D-5042 Erftstadt (DE)**

## Verwendung von Calciumsulfat zur Entwässerung von Abwasserschlamm

Die vorliegende Erfindung betrifft die Verwendung von Calciumsulfat zur Entwässerung von Abwasserschlamm.

Bei jedem Abwasserklärprozeß fällt ein Abwasserschlamm an, der im Bereich kommunaler Abwasserklärung vorwiegend aus organischer Materie besteht. Dieser Abwasserschlamm ist allgemein sehr dünn, d. h. der Trockensubstanzgehalt beträgt 1—4 Gew.-%. Ein weiterer Nachteil des aus kommunaler Abwasserklärung anfallenden Abwasserschlammes ist die leichte Zersetzung durch Bakterien, was zu starker Geruchsbelästigung führt. Ein solcher Abwasserschlamm wird vor der Deponierung oder Nutzung als Dünger in sogenannten Faulräumen stabilisiert. Der dabei entstehende Faulschlamm, der allgemein noch eingedickt wird, besteht aus 90 bis 98 Gew.-% Wasser, das auf mechanischem Wege schwer oder gar nicht abtrennbar ist. Zur Eindickung können dem Abwasserschlamm Flockungshilfsmittel wie organische Polymerverbindungen und/oder Metallsalze wie Eisenchlorid, Aluminiumsulfat zugesetzt werden, wodurch ein Teil des kapillar gebundenen Wassers über Zentrifugen oder Filterpressen abgetrennt werden kann. Der hierbei erhaltene Rückstand enthält je nach durchgeführtem Verfahren 55 bis 85 Gew.-% Wasser. Abwasserschlämme mit weniger als 75 Gew.-% Wasser werden als »stichfest« bezeichnet und werden gegebenenfalls unter Zusatz von Füllstoffen wie beispielsweise von Sand oder Sägemehl deponiert.

Der hohe Wassergehalt der Abwasserschlämme stellt einen hohen Kostenfaktor für den Transport und den Deponieraum dar. Obwohl das Wasser auch in Kammerfilterpressen nicht unter einen Wassergehalt von etwa 50 Gew.-% entfernt werden kann, kommt es auf der Deponie zu einer Wasserabgabe, die zu einer Grundwasserbelastung führt. Ein weiterer Nachteil bei der Filtration von Abwasserschlämmen im frischen oder ausgefaulten Zustand liegt darin, daß die Abwasserschlämme ohne Filterhilfsmittel zum Filterdurchbruch neigen, oder es kommt zum vorzeitigen Porenverschluß der Filtertücher.

In der JP-A-8759/74 wird vorgeschlagen, dem eingedickten Abwasserschlamm Salze des Natriums, Kaliums, Magnesiums, Calciums und Ammoniums in einer Menge von >2000 ppm zuzusetzen. Beispielsweise werden 50 000 ppm (parts per million) NaCl, 500 ppm $Al_2(SO_4)_3$, 250 ppm $Ca(OH)_2$ und 5 ppm eines polymeren Flockungshilfsmittels zugesetzt. Der durch eine Vakuumfiltration erhaltene Rückstand bestand noch zu 74,24 Gew.-% aus Wasser.

Es gehört zum Stand der Technik, gebrannten oder gelöschten Kalk als Filtrierhilfsmittel dem eingedickten Abwasserschlamm zuzusetzen. Der Einsatz von Kalk ist jedoch nicht problemlos, da durch seine Basizität Ammoniumsalze im Abwasserschlamm gespalten werden und Ammoniak in Freiheit gesetzt wird. Hinzu kommt, daß der gelöschte Kalk wasserlöslich ist und zu einer Beeinträchtigung des Grundwassers führt.

In der JP-B-692/67 wird als Filterhilfsmittel ein Gips beansprucht, der in Abgasentschwefelungsanlagen anfällt, welche nach dem Gipsverfahren arbeiten. Dieser Abfallgips enthält aus technischen Gründen noch freies CaO, das oben genannte Nachteile aufweist.

In der JP-A-156 768/77 wird ein bei 120 bis 180°C gebrannter Gips als Filterhilfsmittel für Abwasserschlämme beansprucht. Da der gebrannte Gips chemisch neutral reagiert, kommt es gerade bei neutralen Abwasserschlämmen zu einem Durchbruch kolloider Verunreinigungen bei dem Filtrationsvorgang.

Aus der US-A-3 226 319 ist der Zusatz von Zement oder Gips zusammen mit einem Flockungsmittel bekannt. Der Gips wirkt hierbei als Beschwerstoff und Bindemittel.

Aus der FR-A-1 560 439 ist die Verwendung von neutralem oder CaO-haltigem Gips als Flockungsmittel bei der Aufbereitung von Schmutzwasser bekannt.

Überraschend wurde nun gefunden, daß Abwasserschlamm durch die Zugabe von saurem Abfallgips, wie er beim Aufschluß von Phosphaterzen mit Schwefelsäure bei der Phosphorsäureherstellung — beispielsweise gemäß Beschreibung der DE-C-402 096 — anfällt, leicht entwässert werden kann.

Es wurde weiter gefunden, daß ein Gewichtsverhältnis des Abfallgipses zu der Trockensubstanz des Abwasserschlammes von 0,5 : 1 bis 10 : 1 für eine Entwässerung des Abwasserschlammes ausreichend ist. Höhere Dosierungen des Abfallgipses führen zu einer höheren Entwässerungsrate. Die Entwässerungsrate ist ausreichend, wenn man bei Abwasserschlämmen, die unter Verwendung von Flockungshilfsmitteln, insbesondere bei der Verwendung von Polyacrylat, erhalten werden, ein Gewichtsverhältnis des Abfallgipses zu der Trockensubstanz des Abwasserschlammes von 0,5 : 1 bis 2,5 : 1 einstellt. Eine höhere Dosierung des Abfallgipses im Gewichtsverhältnis des Abfallgipses zu der Trockensubstanz des Abwasserschlammes von 5 : 1 bis 7 : 1 wird man bei solchen Abwasserschlämmen einstellen, die allein auf mechanischem Wege eingedickt werden.

Zweckmäßig erfolgt die Zugabe des Abfallgipses als Feststoff in den Abwasserschlamm. Die Art der verwendeten Flockungshilfsmittel ist von der Schlammherkunft abhängig. Es hat sich herausgestellt, daß günstige Filtereigenschaften resultieren, wenn man nach Zugabe des Abfallgipses bis zur Abtrennung des Wassers eine Reaktionszeit von mindestens 15 Minuten einhält.

Mit der vorgelegten Erfindung wurde ein neues, umweltschützendes Verfahren gefunden, bei dem

2

der bisher ungenutzte Abfallgips zur Entwässerung von Abwasserschlämmen verwendet wird. Der hierbei erhaltene Rückstand kann in dieser Form einerseits problemlos auf einer Deponie gelagert oder, insbesondere bei Zugabe weiterer Düngesalze, als Dünger recycled werden, da mehr als 90% des im Abwasserschlamm vorhandenen Wassers abgetrennt werden können. Als weiterer Vorteil kann gewertet werden, daß das aus dem Abwasserschlamm abgetrennte Wasser so rein ist, daß es direkt in den Vorfluter abgeschlagen oder problemlos in den Zulauf zur Kläranlage rückgeführt werden kann. Eine Freisetzung von gasförmigem Ammoniak findet nicht statt.

Das erfindungsgemäße Verfahren wird anhand der Beispiele und Vergleichsbeispiele näher erläutert. Für diese Beispiele und Vergleichsbeispiele wurde aus einem Faulturm einer kommunalen Kläranlage ausgefaulter Mischschlamm mit 2,3 Gew.-% Trockensubstanz verwendet.

## Vergleichsbeispiel A

Eine 100-ml-Probe dieses Schlammes wurde bei einem Vakuum von 50 Torr durch ein Polypropylenfiltertuch der Porenweite 280/370 µm filtriert. Das Filtrat war stark getrübt und enthielt nahezu den gesamten Feststoff. 99 ml Filtrat wurden aufgefangen. Auf dem Filtertuch blieb kein geschlossener Filterkuchen zurück.

## Vergleichsbeispiel B

100 ml des gleichen Schlammes wurden mit 10 g gelöschtem Kalk versetzt und bei einem Vakuum von 67 mbar (50 Torr) filtriert. Das erhaltene Filtrat war schwach getrübt und enthielt noch einen Teil der Trockensubstanz. 79 ml Filtrat wurden aufgefangen. Der Filterkuchen hatte thixotrope Eigenschaften und bestand zu 40,1% aus Wasser.

## Vergleichsbeispiele C, D, E

Die Schlammproben wurden mit 25 bzw. 15 bzw. 5 g Anhydrit ($CaSO_4$)/100 ml Schlamm vermischt und nach 15 Minuten bei 11 500 UpM weitere 15 Minuten lang zentrifugiert. In Vorversuchen wurde gefunden, daß diese Proben nicht durch eine Vakuumfiltration getrennt werden konnten, da nach kurzer Zeit die Filtertücher verstopften. Die erzielten Ergebnisse der Entwässerung sind in Tabelle 1 zusammengefaßt:

Tabelle 1

| Vers. Nr. | $CaSO_4$ | eingesetztes $H_2O$ | entferntes $H_2O$ | TS — im Rückstand |
|---|---|---|---|---|
| | (g) | (ml) | (ml) | % (bei 60°C) |
| C | 25 | 100 | 87,5 | 74,0 |
| D | 15 | 105,2 | 95,5 | 70,2 |
| E | 5 | 121,8 | 113,8 | 65,3 |

TS = Trockensubstanz.

## Vergleichsbeispiel F

100 ml Schlamm wurden mit 25 g käuflichem Stuckgips ($CaSO_4 \cdot 0,5 H_2O$) versetzt und 30 Minuten gerührt. Anschließend wurde im Vakuum bei 67 mbar (50 Torr) filtriert. Nach Durchgang von 20 ml Filtrat war das Filtertuch vollkommen verstopft. Der im Filter verbliebene Rest war in eine flüssige und feste Phase getrennt.

## Vergleichsbeispiel G

100 ml Schlamm wurden mit 25 g eines getrockneten, käuflichen Gips-Dihydrates ($CaSO_4 \cdot 2 H_2O$) versetzt und nach 60 Minuten Rührzeit bei 11 500 UpM 15 Minuten lang zentrifugiert.

Es wurden 91 ml Filtrat erhalten. Der Rückstand enthielt 28,1 Gew.-% Wasser.

3

## Beispiele 1 – 5

### (erfindungsgemäß)

Je 100 ml Schlamm wurden mit 5, 10, 15, 20 und 25 g eines schwachsauren, feuchten Abfallgipses versetzt und 15 Minuten gerührt. Danach wurde im Vakuum bei 67 mbar (50 Torr) filtriert. Nachdem ca. 10 ml Filtrat durchgelaufen waren, blieb das Filtrat klar. Die Ergebnisse der Versuche sind der Tabelle 2 zu entnehmen:

Tabelle 2

| Vers. Nr. | Abfallgips (g) | Filtrationszeit (min) | Filtrat (ml) | % $H_2O$ im Rückstand |
|---|---|---|---|---|
| 1 | 5 | 5 | 60 | n. b. |
| 2 | 10 | 5 | 97,0 | 40,0 |
| 3 | 15 | 5 | 99,6 | 25,1 |
| 4 | 20 | 3 | 100,0 | 22,9 |
| 5 | 25 | 2 | 100,25 | 24,7 |

### Patentansprüche

1. Verwendung von Calciumsulfat zur Entwässerung von Abwasserschlamm, dadurch gekennzeichnet, daß man einen sauren Abfallgips einsetzt, wie er beim Aufschluß von Phosphaterzen mit Schwefelsäure bei der Phosphorsäureherstellung anfällt.

2. Verwendung von Calciumsulfat nach Anspruch 1, dadurch gekennzeichnet, daß man ein Gewichtsverhältnis des Abfallgipses zu der Trockensubstanz des Abwasserschlammes von 0,5 : 1 bis 10 : 1 einstellt.

3. Verwendung von Calciumsulfat nach Anspruch 1 und 2, dadurch gekennzeichnet, daß man ein Gewichtsverhältnis des Abfallgipses zu der Trockensubstanz des Abwasserschlammes von 0,5 : 1 bis 2,5 : 1 einstellt bei Abwasserschlämmen, die unter Verwendung von Flockungshilfsmitteln erhalten werden.

4. Verwendung von Calciumsulfat nach Anspruch 1 und 2, dadurch gekennzeichnet, daß man ein Gewichtsverhältnis des Abfallgipses zu der Trockensubstanz des Abwasserschlammes von 5 : 1 bis 7 : 1 einstellt bei Abwasserschlämmen, die allein auf mechanischem Wege erhalten werden.

5. Verwendung von Calciumsulfat nach einem der Ansprüche 1 – 4, dadurch gekennzeichnet, daß man nach der Zugabe des Abfallgipses bis zur Abtrennung des Wassers eine Reaktionszeit von mindestens 15 Minuten einhält.

6. Verwendung nach einem der Ansprüche 3 oder 5, dadurch gekennzeichnet, daß man als Flockungshilfsmittel Polyacrylat einsetzt.

### Claims

1. Use of calcium sulfate for dehydrating waste water sludge, characterized in that acid waste gypsum such as that which is obtained by subjecting phosphate ores to processing treatment with sulfuric acid for the preparation of phosphoric acid, is used.

2. Use of calcium sulfate as claimed in claim 1, characterized in that a quantitative ratio of 0.5 : 1 to 10 : 1 is established between the waste gypsum and dry substance of the waste water sludge.

3. Use of calcium sulfate as claimed in claims 1 and 2, characterized in that a quantitative ratio of 0.5 : 1 to 2.5 : 1 is established between the waste gypsum and dry substance of the waste sludge in waste water sludges which are obtained with the use of flocculating aids.

4. Use of calcium sulfate as claimed in claims 1 and 2, characterized in that a quantitative ratio of 5 : 1 to 7 : 1 is established between the waste gypsum and dry substance of the waste water sludge in waste water sludges which are obtained exclusively by mechanical means.

5. Use of calcium sulfate as claimed in any one of claims 1 to 4, characterized in that, after addition of the waste gypsum, the water is separated after a reaction period of at least 15 minutes.

**0 020 904**

6. Use of calcium sulfate as claimed in any one of claims 3 to 5, characterized in that polyacrylate is used as a flocculating aid.

.

**Revendications**

1. Utilisation du sulfate de calcium pour la déshydratation des boues d'eaux résiduaires, caractérisée en ce que l'on utilise un plâtre résiduaire acide tel qu'obtenu à l'attaque des minerais de phosphate par l'acide sulfurique à la préparation de l'acide phosphorique.

2. Utilisation du sulfate de calcium selon la revendication 1, caractérisée en ce que l'on règle un rapport de poids de 0,5 : 1 à 10 : 1 entre le plâtre résiduaire et les matières sèches des boues résiduaires.

3. Utilisation du sulfate de calcium selon les revendications 1 et 2, caractérisée en ce que l'on règle un rapport de poids de 0,5 : 1 à 2,5 : 1 entre le plâtre résiduaire et les matières sèches des boues d'eaux résiduaires dans le cas des boues d'eaux résiduaires obtenues avec utilisation de produits auxiliaires floculants.

4. Utilisation du sulfate de calcium selon les revendications 1 et 2, caractérisée en ce que l'on règle un rapport de poids de 5 : 1 à 7 : 1 entre le plâtre résiduaire et les matières sèches des boues d'eaux résiduaires dans le cas de boues d'eaux résiduaires obtenues uniquement par des moyens mécaniques.

5. Utilisation du sulfate de calcium selon l'une des revendications 1 à 4, caractérisée en ce que, après addition du plâtre résiduaire, on respecte une durée de réaction d'au moins 15 min avant de séparer l'eau.

6. Utilisation selon l'une des revendications 3 ou 5, caractérisée en ce que l'on utilise en tant que produit auxiliaire de floculation un polyacrylate.